# EUROPÄISCHE PATENTSCHRIFT

(11) **EP 4 198 523 B1**
(45) Veröffentlichungstag und Bekanntmachung des Hinweises auf die Patenterteilung: **23.07.2025**
(21) Anmeldenummer: 22203705.3
(22) Anmeldetag: 26.10.2022
(51) Int. Cl.: G01P 21/02, G01P 3/44, B62M 6/50, B62J 45/412, B62J 45/413

(54) **VERFAHREN UND VORRICHTUNG ZUM PLAUSIBILISIEREN EINES SENSORSIGNALS EINES EINSPURIGEN FAHRZEUGS**
METHOD AND DEVICE FOR CHECKING THE PLAUSIBILITY OF A SENSOR SIGNAL OF A SINGLE-TRACK VEHICLE
PROCÉDÉ ET DISPOSITIF DE PLAUSIBILISATION D'UN SIGNAL DE CAPTEUR D'UN VÉHICULE À VOIE UNIQUE

(30) Priorität: 17.12.2021 DE 102021214598
(43) Veröffentlichungstag der Anmeldung: 21.06.2023
(73) Patentinhaber: Robert Bosch GmbH, 70442 Stuttgart (DE)
(72) Erfinder: Schnee, Jan, 71093 Weil Im Schoenbuch (DE); Pletinckx, Jo, 74372 Sersheim (DE)

(56) Entgegenhaltungen:
- EP-A2- 2 977 648
- DE-A1- 102014 212 760
- DE-B3- 102019 115 312

## Beschreibung

### Stand der Technik

Die Erfindung betrifft ein Verfahren zur Plausibilisierung eines Sensorsignals eines einspurigen Fahrzeugs, insbesondere eines eBikes, eines Pedelecs oder dergleichen.

Die Plausibilisierung von Sensorsignalen eines Fahrzeugs wird in den Patentschriften DE102019115312 B3 und DE102014212760 A1 beschrieben.

Die Erfindung betrifft weiter eine Plausibilisierungsvorrichtung, die ausgebildet ist, die Zuverlässigkeit eines Sensorsignals eines einspurigen Fahrzeugs, insbesondere eines eBikes, eines Pedelecs oder dergleichen, zu ermitteln.

Die Erfindung betrifft darüber hinaus ein System aus einem einspurigen Fahrzeug, insbesondere eines eBikes, eines Pedelecs oder dergleichen, und einer Plausibilisierungsvorrichtung.

Obwohl die vorliegende Erfindung allgemein auf beliebige einspurige Fahrzeuge anwendbar ist, wird die vorliegende Erfindung in Bezug auf Fahrräder in Form von eBikes oder Pedelecs beschrieben.

EBikes ermöglichen durch eine Antriebseinheit mit Motor eine Antriebsunterstützung für einen Fahrer. Die jeweilige Antriebseinheit umfasst dabei nicht nur den jeweiligen Antriebsmotor, sondern auch Sensorik, beispielsweise um die Fahrgeschwindigkeit des eBikes zu ermitteln. Die Antriebsunterstützung wird dabei abhängig von der Fahrgeschwindigkeit des eBikes verändert. Oberhalb einer maximalen Geschwindigkeit des eBikes wird durch die Antriebsunterstützung dann kein unterstützendes Antriebsdrehmoment mehr bereitgestellt.

Aufgrund von Fehlfunktionen der Sensorik kann es vorkommen, dass ein Sensor für die Fahrgeschwindigkeit eine zu geringe Geschwindigkeit misst und deshalb die Antriebsunterstützung über die maximale Geschwindigkeit hinaus aktiviert bleibt.

### Offenbarung der Erfindung

In einer Ausführungsform stellt die vorliegende Erfindung ein Verfahren zur Plausibilisierung eines Sensorsignals eines einspurigen Fahrzeugs bereit, umfassend die folgenden Schritte:
- Schätzen von Übersetzungsverhältnissen zwischen einer Raddrehzahl eines Rades und einer Trittfrequenz eines Pedals einer Pedaleinheit und/oder einer Antriebsdrehzahl eines Antriebs des einspurigen Fahrzeugs zu mehreren Zeitpunkten,
- Ermitteln eines Werts eines Zuverlässigkeitsindikators basierend auf den geschätzten Übersetzungsverhältnissen, wobei der Wert des Zuverlässigkeitsindikators anhand einer statistischen Kenngröße, insbesondere einer Varianz, der geschätzten Übersetzungsverhältnisse und/oder eines Histogramms der geschätzten Übersetzungsverhältnisse ermittelt wird,
- Plausibilisieren des Sensorsignals anhand eines Vergleichs des Werts des Zuverlässigkeitsindikators mit einem Schwellwert, wobei der Schwellwert einem maximal zulässigen Wert des Zuverlässigkeitsindikators entspricht.

In einer Ausführungsform stellt die vorliegende Erfindung eine Plausibilisierungsvorrichtung bereit, die ausgebildet ist, die Zuverlässigkeit eines Sensorsignals eines einspurigen Fahrzeugs zu ermitteln, umfassend:
- eine Schätzeinrichtung, ausgebildet zum Schätzen eines Übersetzungsverhältnisses zwischen einer Raddrehzahl und einer Trittfrequenz und/oder einer Antriebsdrehzahl des einspurigen Fahrzeugs zu mehreren Zeitpunkten,
- eine Ermittlungseinrichtung, ausgebildet zum Ermitteln eines Werts eines Zuverlässigkeitsindikators basierend auf den geschätzten Übersetzungsverhältnissen, wobei der Wert des Zuverlässigkeitsindikators anhand einer statistischen Kenngröße, insbesondere einer Varianz, der geschätzten Übersetzungsverhältnisse und/oder eines Histogramms der geschätzten Übersetzungsverhältnisse ermittelt wird,
- eine Plausibilisierungseinrichtung, ausgebildet zum Plausibilisieren des Sensorsignals anhand des Werts des Zuverlässigkeitsindikators und eines Schwellwerts, wobei der Schwellwert einem maximal zulässigen Wert des Zuverlässigkeitsindikators entspricht.

In einer Ausführungsform stellt die vorliegende Erfindung ein System aus einem einspurigen Fahrzeug und einer Plausibilisierungsvorrichtung gemäß Anspruch 10 bereit.

Während eines Pedalierens bei einer Fahrt kann das Übersetzungsverhältnis, also das Verhältnis zwischen der Pedal-/Antriebsdrehzahl und der Raddrehzahl, annähernd konstant sein. Das Übersetzungsverhältnis kann anhand des Verhältnis der Werte eines Raddrehzahlsensors und eines Pedal-/Antriebsdrehzahlsensors gemäß Ausführungsformen der Erfindung geschätzt werden. Wenn durch Fehlfunktionen ein Sensor falsche Werte liefert, ist das geschätzte Übersetzungsverhältnis insbesondere nicht mehr konstant, sondern kann einen großen Wert einer statistischen Kenngröße, insbesondere eine hohe Varianz, über die Fahrt aufweisen. Eine hohe Varianz der geschätzten Übersetzungsverhältnisse kann also beispielsweise ein Indikator sein, dass ein Sensor fehlerhaft ist.

Gemäß Ausführungsformen der Erfindung können die geschätzten Übersetzungsverhältnisse auch in ein Histogramm übertragen werden. Wenn keine Fehlfunktionen des Sensors vorliegen, ergibt sich ein dünn besetztes Histogramm (dünne Linien im Histogramm, die den Übersetzungsverhältnissen der verschiedenen Gänge entsprechen). Ein "Verschmieren" der Linien hingegen ist ein Indikator dafür, dass der Sensor falsche Werte liefert. Der Vorteil des Histogramms ist, dass auch langsame Veränderungen der geschätzten Übersetzungen erkannt werden können. Wenn sich die geschätzten Übersetzungen lediglich langsam ändern, ist deren statistische Kenngröße, insbesondere deren Varianz, gering, sodass der Wert des Zuverlässigkeitsindikators ggf. nicht den Schwellwert erreicht, jedoch ist das "Verschmieren" der Linien im Histogramm auch bei langsamen Veränderungen erkennbar.

Einer der damit erzielten Vorteile ist, dass auf einfache Weise die Zuverlässigkeit eines Sensorsignals ermittelt werden kann und so Fehlfunktionen eines Sensors detektiert werden können. Ein weiterer Vorteil ist, dass die Plausibilisierung ohne einen redundanten Sensor durchgeführt werden kann. Somit kann das Verfahren auf einfache und kostengünstige Weise implementiert werden.

Weitere Merkmale, Vorteile und weitere Ausführungsformen der Erfindung sind im Folgenden beschrieben oder werden dadurch offenbar.

Gemäß einer vorteilhaften Weiterbildung der Erfindung wird das Schätzen der Übersetzungsverhältnisse ausgesetzt, solange eine Änderung des Übersetzungsverhältnisses stattfindet und/oder solange ein Mindestdrehmoment an einer Antriebsseite des einspurigen Fahrzeugs unterschritten wird. Während der Änderung des Übersetzungsverhältnisses und/oder solange kein Drehmoment an der Antriebsseite des einspurigen Fahrzeugs anliegt, insbesondere sich das Fahrrad also im Freilauf befindet, können die Übersetzungsverhältnisse einen großen Wert einer statistischen Kenngröße, insbesondere eine große Varianz, aufweisen und es könnte ein fehlerhafter Wert des Zuverlässigkeitsindikators ermittelt werden. Durch das Aussetzen der Schätzung kann die Korrektheit des Zuverlässigkeitsindikators gewährleistet werden. Die Änderung des Übersetzungsverhältnisses kann beispielsweise über eine sprunghafte Änderung der Motordrehzahl detektiert werden. Zusätzlich oder alternativ kann die Schätzung ebenfalls ausgesetzt werden, wenn eine Mindestdrehzahl und/oder eine Mindesttrittfrequenz eines Antriebs unterschritten wird. Es ist auch möglich, dass die Schätzung bei Detektion einer Änderung des Drehmoments und/oder bei Unterschreiten des Mindestdrehmoments, der Mindestdrehzahl und/oder der Mindesttrittfrequenz für einen vordefinierten Zeitraum ausgesetzt wird.

Gemäß einer weiteren vorteilhaften Weiterbildung der Erfindung wird der Wert des Zuverlässigkeitsindikators anhand der statistischen Kenngröße, insbesondere der Varianz, von geschätzten Übersetzungsverhältnissen ermittelt, die seit der letzten Änderung des Übersetzungsverhältnisses ermittelt wurden. Vorteil hiervon ist, dass die Korrektheit beziehungsweise Genauigkeit des Zuverlässigkeitsindikators gesteigert werden kann, da bei mehreren schnellen Änderungen des Übersetzungsverhältnisses die Schätzungen des Übersetzungsverhältnisses eine inhärent große Varianz aufweisen.

Gemäß einer weiteren vorteilhaften Weiterbildung der Erfindung wird der Wert des Zuverlässigkeitsindikators basierend auf einer Anzahl von mindestens 3 und maximal 50 zuletzt geschätzten Übersetzungsverhältnissen, insbesondere mindestens 5 und maximal 30 zuletzt geschätzten Übersetzungsverhältnissen, vorzugsweise mindestens 8 und maximal 20 zuletzt geschätzten Übersetzungsverhältnissen ermittelt. Vorteil hiervon ist, dass der Wert des Zuverlässigkeitsindikators auf einer ausreichenden Anzahl von Werten basiert, um das Sensorsignal plausibilisieren zu können und gleichzeitig der Wert des Zuverlässigkeitsindikators hinreichend schnell ermittelt werden kann.

Gemäß einer weiteren vorteilhaften Weiterbildung der Erfindung wird die Anzahl der geschätzten Übersetzungsverhältnisse anhand des Werts des Zuverlässigkeitsindikators festgelegt. Wenn der Wert des Zuverlässigkeitsindikators gering ist, die Wahrscheinlichkeit für Fehlfunktionen also niedrig ist, kann die verwendete Anzahl der geschätzten Übersetzungsverhältnisse verringert werden. Hierdurch kann die Plausibilisierung effizienter durchgeführt werden.

Gemäß einer weiteren vorteilhaften Weiterbildung der Erfindung wird ein Informationssignal zum Informieren eines Nutzers über eine Schwellwertübertretung erzeugt und/oder eine Antriebsleistung reduziert, wenn der Wert des Zuverlässigkeitsindikators den Schwellwert überschreitet. Das Informationssignal kann beispielsweise eine Meldung sein, dass das Fahrzeug an einer Servicestelle untersucht werden muss. Damit kann gewährleistet werden, dass ein Benutzer weiß, dass eine Fehlfunktion vorliegt und dass das einspurige Fahrzeug geprüft werden muss. Zudem wird sichergestellt, dass das einspurige Fahrzeug nicht über die maximale Geschwindigkeit hinaus von der Antriebseinheit beschleunigt wird.

Gemäß einer weiteren vorteilhaften Weiterbildung der Erfindung wird der Wert des Zuverlässigkeitsindikators basierend auf einem Spitzenerkennungsalgorithmus und/oder auf einer Ableitung zumindest erster Ordnung einer Funktion, die die Werte der geschätzten Übersetzungsverhältnisse beschreibt, ermittelt. Bei Fehlfunktionen der Sensoren kann es zu einem Zeitpunkt zu sprunghaften Veränderungen der geschätzten Übersetzungsverhältnisse kommen, obwohl das Übersetzungsverhältnis nicht im selben Zeitpunkt geändert wurde. Diese sprunghaften Veränderungen können folglich ebenfalls als Zuverlässigkeitsindikator dienen. Durch einen Spitzenerkennungsalgorithmus ("Peak-Detection-Algorithmus"), zum Beispiel CFAR, können solche Sprünge auf einfache Weise erkannt werden. Alternativ oder zusätzlich kann eine Funktion bestimmt werden, die die Übersetzungsverhältnisse beschreibt, zum Beispiel Mithilfe eines Savitzky-Golay Filters, und von dieser Funktion kann die Ableitung bestimmt werden. Betragsmäßig hohe Werte der Ableitung sind ebenfalls Indikatoren für sprunghafte Veränderungen und können somit zur Ermittlung des Werts des Zuverlässigkeitsindikators herangezogen werden. Vorteil hiervon ist, dass der Wert des Zuverlässigkeitsindikators auf einfache Weise ermittelbar ist.

Gemäß einer weiteren vorteilhaften Weiterbildung der Erfindung entspricht der anhand des Histogramms ermittelte Wert des Zuverlässigkeitsindikators einer Breite einer oder mehrerer Spitzen im Histogramm. Hierfür werden die geschätzten Übersetzungsverhältnisse in vordefinierte Körbe (Bins) einsortiert, z.B. können in einem Bereich der geschätzten Übersetzungsverhältnisse von 0,5 bis 5 bis zu 500 Körbe verwendet werden. Im Histogramm ergeben sich hohe Werte, wenn geschätzte Übersetzungsverhältnisse in einzelnen Körben häufig vorkommen. Wenn die Sensoren keine Fehlfunktionen aufweisen wird erwartet, dass diejenigen Übersetzungsverhältnisse häufig vorkommen, die den Übersetzungsverhältnissen der Gänge entsprechen. Durch Vibrationen, Schlupf und ungenaue Messungen können auch Übersetzungsverhältnisse geschätzt werden, deren Wert nah an den Übersetzungsverhältnissen der Gänge liegt. Im Histogramm zeigt sich dies anhand schmaler aber hoher Spitzen. Durch Fehlfunktion verändern sich die geschätzten Übersetzungsverhältnisse und entsprechen nicht mehr den Übersetzungsverhältnissen der Gänge, sondern streuen. Dies zeigt sich im Histogramm dadurch, dass die Spitzen breiter und weniger hoch sind, als Spitzen in einem Histogramm, das entsteht, wenn keine Fehlfunktionen der Sensoren vorliegt. Die Breite der Spitzen ist also ein Zuverlässigkeitsindikator für das Sensorsignal. Hierdurch kann auf einfache Weise ein Wert des Zuverlässigkeitsindikators bestimmt werden.

Die Breite der Spitzen kann dabei auf mehrere Weisen bestimmt werden. Beispielsweise werden mit Hilfe eines Spitzenerkennungsalgorithmus, insbesondere CFAR, zunächst die einzelnen Spitzen identifiziert, wobei die Spitzen in einem fehlerfreien Zustand der Sensoren gefahrenen Übersetzungsverhältnissen entsprechen. Die Breite dieser Spitze wird bestimmt, indem die Differenz des kleinsten und des größten geschätzten Übersetzungsverhältnisses, die sich in einem durchgehenden Wertebereich befinden, wobei insbesondere jeder Wert innerhalb des Wertebereichs mindestens ein Mal geschätzt wurde, gebildet wird. Die Differenz entspricht folglich der maximalen Breite einer Spitze. Alternativ können auch lediglich diejenigen Übersetzungsverhältnisse berücksichtigt werden, die öfter als ein Grenzwert geschätzt worden sind. Der Grenzwert kann beispielsweise der Hälfte des maximalen Werts einer Spitze entsprechen, beispielsweise Full Width at Half Maximum. Der Schwellwert, ab dem das Sensorsignal als unzuverlässig gilt, kann in diesem Fall 0,1, insbesondere 0,05 und vorzugsweise 0,03 sein. Von den berücksichtigten geschätzten Übersetzungsverhältnissen wird ebenfalls die Differenz des größten und des kleinsten Werts innerhalb eines Bereichs gebildet. Hierdurch werden einmalige Ausreißer nicht berücksichtigt. Wenn die geschätzten Übersetzungsverhältnisse alle in einem einzigen Wertebereich liegen, es folglich nur eine Spitze gibt, kann die Differenz direkt als Zuverlässigkeitsindikator genutzt werden. Wenn hingegen die geschätzten Übersetzungsverhältnisse in mehreren Wertebereichen liegen - beispielsweise, weil während der Fahrt der Gang geändert wurde - und folglich mehrere Differenzen berechnet worden sind, kann beispielsweise der Durchschnitt oder der maximale Wert der Differenzen als Wert des Zuverlässigkeitsindikators genutzt werden.

Gemäß einer weiteren vorteilhaften Weiterbildung der Erfindung ist das Sensorsignal ein Geschwindigkeitssignal, ein Antriebsdrehzahlsignal, ein Trittfrequenzsignal und/oder ein Raddrehzahlsignal. Vorteil hiervon ist, dass verschiedene Sensorsignale plausibilisiert werden können. Es kann jeweils ein Signal plausibilisiert werden, indem ein anderes Signal als bekannt und korrekt angenommen wird. Beispielsweise kann mithilfe der Trittfrequenz die Drehzahl eines Rades plausibilisiert werden, aus der auf die Geschwindigkeit des einspurigen Fahrzeugs geschlossen werden kann. Es ist aber auch möglich, ausgehend von der Geschwindigkeit die Antriebsdrehzahl zu plausibilisieren. Hierfür kann die Geschwindigkeit über eine Drittquelle zum Beispiel eine GPS-Erfassung bestimmt werden.

Gemäß einer weiteren vorteilhaften Weiterbildung der Erfindung wird der Wert des Zuverlässigkeitsindikators basierend auf einer relativen Differenz zwischen dem geschätzten Übersetzungsverhältnis und einem von dem einspurigen Fahrzeug bereitgestellten Übersetzungsverhältnis ermittelt, wobei das von dem einspurigen Fahrzeug bereitgestellte Übersetzungsverhältnis kontinuierlich veränderbar ist. Das von dem einspurigen Fahrzeug bereitgestellte Übersetzungsverhältnis kann beispielsweise über eine Draht- oder Funkschnittstelle bereitgestellt werden und kann aus einer aktuellen Stufe eines Schaltwerkes ermittelt werden. Vorteil hiervon ist, dass das Verfahren auch bei einspurigen Fahrzeugen mit einer kontinuierlichen Übersetzung - also ohne feste Gänge - nutzbar ist. Bei einer kontinuierlichen Übersetzung verändern sich entsprechend auch die geschätzten Übersetzungsverhältnisse kontinuierlich, sodass der Wert der statistischen Kenngröße, insbesondere deren Varianz, inhärent hoch ist. Da jedoch zu jedem Zeitpunkt die tatsächlichen und die geschätzten Übersetzungsverhältnisse im Idealfall gleich sind, ist deren Differenz annähernd null und somit annähernd konstant. Starke Abweichungen und/oder eine hohe Varianz dieser Differenz ist folglich ein Zeichen, dass ein Sensor falsche Signale sendet und somit kann hieraus der Wert des Zuverlässigkeitsindikators ermittelt werden. Es ist es ebenfalls möglich, dass die Plausibilisierung über das Histogramm erfolgt.

Gemäß einer weiteren vorteilhaften Weiterbildung der Erfindung basiert der Wert des Zuverlässigkeitsindikators auf einer Anzahl von detektierten Spitzen. Im fehlerfreien Zustand der Sensoren entspricht die Anzahl der Spitzen maximal der Anzahl der Gänge. Wenn die Anzahl der Spitzen höher als die Anzahl der Gänge ist, ist dies ein Indikator, dass das Sensorsignal unzuverlässig ist. Vorteil hiervon ist, dass der Zuverlässigkeitsindikator auf einfache Weise bestimmt werden kann.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt
- Figur 1: in schematischer Form Schritte eines Verfahrens gemäß einer Ausführungsform der vorliegenden Erfindung;
- Figur 2: in schematischer Form ein erstes Histogramm gemäß einer weiteren Ausführungsform der vorliegenden Erfindung;
- Figur 3: in schematischer Form ein zweites Histogramm gemäß einer weiteren Ausführungsform der vorliegenden Erfindung; und
- Figur 4: in schematischer Form ein drittes Histogramm gemäß einer Ausführungsform der vorliegenden Erfindung.

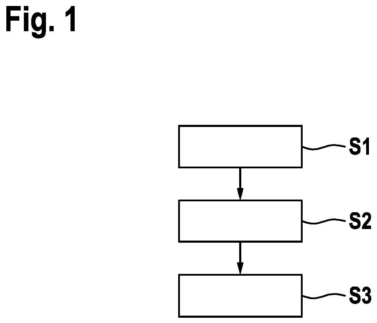

Figur 1 zeigt in schematischer Form Schritte eines Verfahrens gemäß einer Ausführungsform der vorliegenden Erfindung.

Im Detail zeigt Figur 1 Schritte eines Verfahren zur Plausibilisierung eines Sensorsignals eines einspurigen Fahrzeugs, umfassend die folgenden Schritte:
- Schätzen S1 von Übersetzungsverhältnissen zwischen einer Raddrehzahl eines Rades und einer Trittfrequenz eines Pedals einer Pedaleinheit und/oder einer Antriebsdrehzahl eines Antriebs des einspurigen Fahrzeugs zu mehreren Zeitpunkten,
- Ermitteln S2 eines Werts eines Zuverlässigkeitsindikators basierend auf den geschätzten Übersetzungsverhältnissen, wobei der Wert des Zuverlässigkeitsindikators anhand einer statistischen Kenngröße, insbesondere einer Varianz, der geschätzten Übersetzungsverhältnisse und/oder eines Histogramms der geschätzten Übersetzungsverhältnisse ermittelt wird,
- Plausibilisieren S3 des Sensorsignals anhand eines Vergleichs des Werts des Zuverlässigkeitsindikators mit einem Schwellwert, wobei der Schwellwert einem maximal zulässigen Wert des Zuverlässigkeitsindikators entspricht

Mit anderen Worten wird in dem Schritt S1 bei einem einspurigen Fahrzeug ein Übersetzungsverhältnis als das Verhältnis einer Raddrehzahl, zum Beispiel einer Hinterraddrehzahl und einer Trittfrequenz eines Pedals geschätzt. Beispielsweise bei einem Fahrrad steht die Trittfrequenz eines Pedals eines Antriebs über eine Kette in einem festen Verhältnis zur Drehzahl eines Hinterrades. Solange sich das Hinterrad nicht im Freilauf befindet ist das geschätzte Übersetzungsverhältnis also annähernd konstant. Dieses Übersetzungsverhältnis wird zu mehreren Zeitpunkten geschätzt.

Mit anderen Worten wird in dem Schritt S2 anhand der geschätzten Übersetzungsverhältnisse ein Wert eines Zuverlässigkeitsindikators ermittelt. Solange sich das Fahrrad in einem festen Gang befindet, bleibt die tatsächliche Übersetzung zwischen Antrieb und Hinterrad konstant und folglich muss auch die geschätzte Übersetzung konstant bleiben, abgesehen von kleinen Messungenauigkeiten. Dies bedeutet, dass der Wert der statistischen Kenngröße, insbesondere die Varianz, der geschätzten Übersetzungsverhältnisse klein ist, solange die zum Schätzen des Übersetzungsverhältnisses benötigten Sensoren fehlerfrei arbeiten. Sollte jedoch durch Fehlfunktionen ein Sensor falsche Werte liefern, wäre das geschätzte Übersetzungsverhältnis nicht mehr konstant, sondern würde über eine Fahrt hinweg schwanken. Dies zeigt sich anhand einem im Vergleich zum fehlerfreien Zustand erhöhten Wert der statistischen Kenngröße, insbesondere einer erhöhten Varianz. Der Wert der statistischen Kenngröße der Übersetzungsverhältnisse gibt folglich Aufschluss über die Zuverlässigkeit des Sensorsignals und kann als Basis für den Wert des Zuverlässigkeitsindikators dienen.

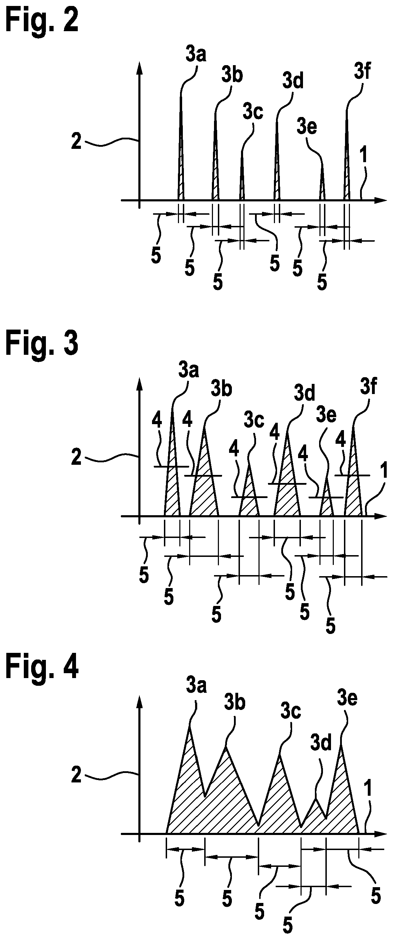

Alternativ oder zusätzlich können im Schritt S2 die geschätzten Übersetzungsverhältnisse in ein Histogramm eingetragen werden. Ein Fahrrad hat eine feste Anzahl an Gängen und folglich eine feste Anzahl an möglichen Übersetzungsverhältnissen. Wenn also die während der Fahrt geschätzten Übersetzungsverhältnisse in ein Histogramm eingetragen werden, müssten im fehlerfreien Zustand lediglich Übersetzungsverhältnisse geschätzt werden, die den Übersetzungsverhältnissen der einzelnen Gänge entsprechen. Dies zeigt sich im Histogramm daran, dass für jeden Gang eine Linie entsteht, die zu dem Übersetzungsverhältnis des Ganges korrespondiert. Durch Messungenauigkeiten und Vibrationen können die tatsächlich geschätzten Übersetzungsverhältnisse um die Idealwerte schwanken, sodass sich in Realität Spitzen im Histogramm ergeben. Die Breite dieser Spitzen ist im fehlerfreien Zustand schmal, d.h. die Breite der Spitzen ist klein gegenüber dem Abstand der Spitzen untereinander. Wenn jedoch durch Fehlfunktionen eines Sensors die geschätzten Übersetzungsverhältnisse nicht mehr konstant sind, äußert sich das darin, dass die Spitzen im Histogramm breiter werden und im Extremfall ineinander "verschmieren". Anhand der Breite der Spitzen lässt sich also ebenfalls die Zuverlässigkeit des Sensorsignals erkennen, sodass auch die Breite der Spitzen im Histogramm als Basis für den Wert des Zuverlässigkeitsindikators dienen kann. Dies wird in den Figuren 2 bis 4 noch genauer verdeutlicht.

Mit anderen Worten wird in dem Schritt S3 das Sensorsignal anhand eines Vergleichs des Werts des Zuverlässigkeitsindikators mit einem Schwellwert plausibilisiert. Der Schwellwert entspricht dabei insbesondere einem festgelegten Grenzwert, ab dem das Sensorsignal als unzuverlässig klassifiziert wird. Der Schwellwert kann beispielweise empirisch bestimmt werden. Wenn der Wert des Zuverlässigkeitsindikators größer als der Schwellwert ist, der Wert der statistischen Kenngröße, insbesondere die Varianz, der geschätzten Übersetzungsverhältnisse also zu hoch ist, gilt das Sensorsignal als unzuverlässig und eine Antriebsunterstützung des Fahrrads kann abgeschaltet beziehungsweise reduziert werden.

Figur 2 zeigt in schematischer Form ein erstes Histogramm gemäß einer Ausführungsform der vorliegenden Erfindung.

Im Detail zeigt Figur 2 ein Histogramm, welches bei Durchführung des in Figur 1 gezeigten Verfahrens erhalten werden kann. Das Histogramm gemäß Figur 2 zeigt den fehlerfreien Zustand des Fahrrads an. Die Abszisse 1 entspricht den geschätzten Übersetzungsverhältnissen und die Ordinate 2 der Häufigkeit der geschätzten Übersetzungsverhältnisse. Zu erkennen sind sechs Spitzen 3a - f im Histogramm, wobei die Breite 5 der Spitzen jeweils gering ist. Dies ist ein Indikator, dass ein Sensor fehlerfrei funktioniert, da lediglich wenige definierte Übersetzungsverhältnisse geschätzt wurden und diese zu den Gängen des Fahrrads korrespondieren.

Figur 3 zeigt in schematischer Form ein zweites Histogramm gemäß einer Ausführungsform der vorliegenden Erfindung.

Im Vergleich zur Figur 2 zeigt Figur 3 in schematischer Form ein zweites Histogramm gemäß einer Ausführungsform der vorliegenden Erfindung, bei der die Breite 5 der Spitzen 3a - f nicht gering, sondern hoch ist. Das bedeutet, dass die geschätzten Übersetzungsverhältnisse nicht immer zu den realen Übersetzungsverhältnissen der Gänge korrespondieren, sondern zu in der Realität im Fahrrad nicht realisierbaren Übersetzungsverhältnissen. Dies ist ein Indikator, dass das Sensorsignal unzuverlässig beziehungsweise fehlerhaft sein kann. Dabei ist das Sensorsignal umso unzuverlässiger, je breiter und verschmierter die Spitzen 3a - f sind. Die Breite 5 der Spitzen 3a - f kann beispielsweise auf der Abszisse 1 gemessen werden, oder auf halber Höhe 4 der Spitzen, um einzelne Ausreißer ausschließen zu können.

Figur 4 zeigt in schematischer Form ein drittes Histogramm gemäß einer Ausführungsform der vorliegenden Erfindung.

Figur 4 zeigt schließlich in schematischer Form ein drittes Histogramm gemäß einer Ausführungsform der vorliegenden Erfindung, bei der die Spitzen 3a - f "ineinander laufen" und nicht mehr einzelne abgetrennte Bereiche bilden. Es sind also eine Vielzahl unterschiedlicher Übersetzungsverhältnisse geschätzt worden. Dies impliziert, dass das Sensorsignal sehr unzuverlässig ist und der Sensor wahrscheinlich fehlerhaft ist.

Zusammenfassend weist zumindest eine Ausführungsform der vorliegenden Erfindung zumindest eines der folgenden Merkmale auf und/oder stellt zumindest einen der folgenden Vorteile bereit:
- Plausibilisierung eines Sensorsignals auf einfache Weise
- Detektion von Fehlfunktionen eines Sensors
- Plausibilisierung ohne redundanten Sensor
- Plausibilisierung verschiedener Sensorsignale möglich
- Einfache und kostengünstige Implementierung

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Verfahren zur Plausibilisierung eines Sensorsignals eines einspurigen Fahrzeugs, umfassend die folgenden Schritte:
- Schätzen (S1) von Übersetzungsverhältnissen zwischen einer Raddrehzahl eines Rades und einer Trittfrequenz eines Pedals einer Pedaleinheit und/oder einer Antriebsdrehzahl eines Antriebs des einspurigen Fahrzeugs zu mehreren Zeitpunkten, **gekennzeichnet durch** die folgenden Schritte:
- Ermitteln (S2) eines Werts eines Zuverlässigkeitsindikators basierend auf den geschätzten Übersetzungsverhältnissen, wobei der Wert des Zuverlässigkeitsindikators anhand einer statistischen Kenngröße der geschätzten Übersetzungsverhältnisse und/oder eines Histogramms der geschätzten Übersetzungsverhältnisse ermittelt wird,
- Plausibilisieren (S3) des Sensorsignals anhand eines Vergleichs des Werts des Zuverlässigkeitsindikators mit einem Schwellwert, wobei der Schwellwert einem maximal zulässigen Wert des Zuverlässigkeitsindikators entspricht.

2. Verfahren gemäß Anspruch 1, wobei das Schätzen der Übersetzungsverhältnisse ausgesetzt wird, solange eine Änderung des Übersetzungsverhältnisses stattfindet und/oder solange ein Mindestdrehmoment an einer Antriebsseite des einspurigen Fahrzeugs unterschritten wird.

3. Verfahren gemäß einem der Ansprüche 1-2, wobei der Wert des Zuverlässigkeitsindikators basierend auf einer Anzahl von mindestens 3 und maximal 50 zuletzt geschätzten Übersetzungsverhältnissen, insbesondere mindestens 5 und maximal 30 zuletzt geschätzten Übersetzungsverhältnissen, vorzugsweise mindestens 8 und maximal 20 zuletzt geschätzten Übersetzungsverhältnissen ermittelt wird.

4. Verfahren gemäß Anspruch 3, wobei die Anzahl der geschätzten Übersetzungsverhältnisse anhand des Werts des Zuverlässigkeitsindikators festgelegt wird.

5. Verfahren gemäß einem der Ansprüche 1-4, wobei ein Informationssignal zum Informieren eines Nutzers über eine Schwellwertübertretung erzeugt wird und/oder eine Antriebsleistung reduziert wird, wenn der Wert des Zuverlässigkeitsindikators den Schwellwert überschreitet.

6. Verfahren gemäß einem der Ansprüche 1-5, wobei der Wert des Zuverlässigkeitsindikators basierend auf einem Spitzenerkennungsalgorithmus und/oder auf einer Ableitung zumindest erster Ordnung einer Funktion, die die Werte der geschätzten Übersetzungsverhältnisse beschreibt, ermittelt wird.

7. Verfahren gemäß einem der Ansprüche 1-6, wobei der anhand des Histogramms ermittelte Wert des Zuverlässigkeitsindikators einer Breite (5) einer oder mehrerer Spitzen (3a - f) im Histogramm entspricht.

8. Verfahren gemäß einem der Ansprüche 1-7, wobei das Sensorsignal ein Geschwindigkeitssignal, ein Antriebsdrehzahlsignal, ein Trittfrequenzsignal und/oder ein Raddrehzahlsignal ist.

9. Verfahren gemäß einem der Ansprüche 1-8, wobei der Wert des Zuverlässigkeitsindikators basierend auf einer relativen Differenz zwischen dem geschätzten Übersetzungsverhältnis und einem von dem einspurigen Fahrzeug bereitgestellten Übersetzungsverhältnis ermittelt wird, wobei das von dem einspurigen Fahrzeug bereitgestellte Übersetzungsverhältnis kontinuierlich veränderbar ist.

10. Verfahren gemäß einem der Ansprüche 1-9, wobei der Wert des Zuverlässigkeitsindikators auf einer Anzahl von detektierten Spitzen (3a-f) basiert.

11. Verfahren gemäß einem der vorhergehenden Ansprüche, wobei die statistische Kenngröße als eine Varianz ausgebildet ist.

12. Plausibilisierungsvorrichtung, die ausgebildet ist, die Zuverlässigkeit eines Sensorsignals eines einspurigen Fahrzeugs zu ermitteln, umfassend:
- eine Schätzeinrichtung, ausgebildet zum Schätzen eines Übersetzungsverhältnisses zwischen einer Raddrehzahl und einer Trittfrequenz und/oder einer Antriebsdrehzahl des einspurigen Fahrzeugs zu mehreren Zeitpunkten, **gekennzeichnet durch**:
- eine Ermittlungseinrichtung, ausgebildet zum Ermitteln eines Werts eines Zuverlässigkeitsindikators basierend auf den geschätzten Übersetzungsverhältnissen, wobei der Wert des Zuverlässigkeitsindikators anhand einer statistischen Kenngröße, insbesondere einer Varianz, der geschätzten Übersetzungsverhältnisse und/oder eines Histogramms der geschätzten Übersetzungsverhältnisse ermittelt wird,
- eine Plausibilisierungseinrichtung, ausgebildet zum Plausibilisieren des Sensorsignals anhand des Werts des Zuverlässigkeitsindikators und eines Schwellwerts, wobei der Schwellwert einem maximal zulässigen Wert des Zuverlässigkeitsindikators entspricht.

13. System aus einem einspurigen Fahrzeug und einer Plausibilisierungsvorrichtung gemäß Anspruch 12.

## Claims

1. Method for checking the plausibility of a sensor signal from a single-track vehicle, comprising the following steps of:
- estimating (S1) transmission ratios between a wheel speed of a wheel and a cadence of a pedal of a pedal unit and/or a drive speed of a drive of the single-track vehicle at multiple points in time, **characterized by** the following steps of:
- determining (S2) a value of a reliability indicator based on the estimated transmission ratios, the value of the reliability indicator being determined on the basis of a statistical characteristic variable of the estimated transmission ratios and/or a histogram of the estimated transmission ratios,
- checking the plausibility (S3) of the sensor signal by comparing the value of the reliability indicator with a threshold value, the threshold value corresponding to a maximum permissible value of the reliability indicator.

2. Method according to Claim 1, wherein the estimation of the transmission ratios is suspended as long as the transmission ratio changes and/or as long as a minimum torque on a drive side of the single-track vehicle is undershot.

3. Method according to one of Claims 1-2, wherein the value of the reliability indicator is determined based on a number of at least 3 and at most 50 last estimated transmission ratios, in particular at least 5 and at most 30 last estimated transmission ratios, preferably at least 8 and at most 20 last estimated transmission ratios.

4. Method according to Claim 3, wherein the number of estimated transmission ratios is determined on the basis of the value of the reliability indicator.

5. Method according to one of Claims 1 - 4, wherein an information signal for informing a user about a threshold value violation is generated and/or a drive power is reduced when the value of the reliability indicator exceeds the threshold value.

6. Method according to one of Claims 1 - 5, wherein the value of the reliability indicator is determined based on a peak detection algorithm and/or on an at least first-order derivative of a function describing the values of the estimated transmission ratios.

7. Method according to one of Claims 1 - 6, wherein the value of the reliability indicator determined on the basis of the histogram corresponds to a width (5) of one or more peaks (3a - f) in the histogram.

8. Method according to one of Claims 1 - 7, wherein the sensor signal is a speed signal, a drive speed signal, a cadence signal and/or a wheel speed signal.

9. Method according to one of Claims 1 - 8, wherein the value of the reliability indicator is determined based on a relative difference between the estimated transmission ratio and a transmission ratio provided by the single-track vehicle, wherein the transmission ratio provided by the single-track vehicle is continuously variable.

10. Method according to one of Claims 1-9, wherein the value of the reliability indicator is based on a number of detected peaks (3a-f).

11. Method according to one of the preceding claims, wherein the statistical characteristic variable is in the form of a variance.

12. Plausibility-checking apparatus which is designed to determine the reliability of a sensor signal from a single-track vehicle, comprising:
- an estimation device designed to estimate a transmission ratio between a wheel speed and a cadence and/or a drive speed of the single-track vehicle at multiple points in time, **characterized by**:
- a determination device designed to determine a value of a reliability indicator based on the estimated transmission ratios, the value of the reliability indicator being determined on the basis of a statistical characteristic variable, in particular a variance, of the estimated transmission ratios and/or a histogram of the estimated transmission ratios,
- a plausibility-checking device designed to check the plausibility of the sensor signal on the basis of the value of the reliability indicator and a threshold value, the threshold value corresponding to a maximum permissible value of the reliability indicator.

13. System comprising a single-track vehicle and a plausibility-checking apparatus according to Claim 12.

## Revendications

1. Procédé de plausibilisation d'un signal de capteur d'un véhicule à voie unique, comprenant les étapes suivantes :
- estimation (S1) de rapports de transmission entre la vitesse d'une roue et la cadence de pédalage d'un pédalier et/ou la vitesse d'entraînement d'un dispositif d'entraînement d'un véhicule à voie unique à plusieurs instants, **caractérisé par** les étapes suivantes :
- détermination (S2) d'une valeur d'un indicateur de fiabilité sur la base des rapports de transmission estimés, la valeur de l'indicateur de fiabilité étant déterminée à partir d'une caractéristique statistique des rapports de transmission estimés et/ou d'un histogramme des rapports de transmission estimés,
- plausibilisation (S3) du signal de capteur à partir d'une comparaison de la valeur de l'indicateur de fiabilité avec une valeur de seuil, la valeur de seuil correspondant à une valeur maximale admissible de l'indicateur de fiabilité.

2. Procédé selon la revendication 1, dans lequel l'estimation des rapports de transmission est suspendue tant qu'une modification du rapport de transmission a lieu et/ou tant qu'un couple minimum sur un côté d'entraînement du véhicule à voie unique n'est pas atteint.

3. Procédé selon l'une quelconque des revendications 1 et 2, dans lequel la valeur de l'indicateur de fiabilité est déterminée sur la base d'un nombre d'au moins 3 et d'au plus 50 derniers rapports de transmission estimés, en particulier d'au moins 5 et d'au plus 30 derniers rapports de transmission estimés, de préférence d'au moins 8 et d'au plus 20 derniers rapports de transmission estimés.

4. Procédé selon la revendication 3, dans lequel le nombre de rapports de transmission estimés est déterminé à partir de la valeur de l'indicateur de fiabilité.

5. Procédé selon l'une quelconque des revendications 1 à 4, dans lequel un signal d'information destiné à informer un utilisateur d'un franchissement de valeur de seuil est généré et/ou une puissance d'entraînement est réduite lorsque la valeur de l'indicateur de fiabilité dépasse la valeur de seuil.

6. Procédé selon l'une quelconque des revendications 1 à 5, dans lequel la valeur de l'indicateur de fiabilité basée sur un algorithme de détection de pic et/ou sur une dérivée au moins du premier ordre d'une fonction décrivant les valeurs des rapports de transmission estimés est déterminée.

7. Procédé selon l'une quelconque des revendications 1 à 6, dans lequel la valeur de l'indicateur de fiabilité déterminée à partir de l'histogramme correspond à une largeur (5) d'un ou plusieurs pics (3a-f) dans l'histogramme.

8. Procédé selon l'une quelconque des revendications 1 à 7, dans lequel le signal de capteur est un signal de vitesse, un signal de vitesse d'entraînement, un signal de cadence de pédalage et/ou un signal de vitesse de roue.

9. Procédé selon l'une quelconque des revendications 1 à 8, dans lequel la valeur de l'indicateur de fiabilité est déterminée sur la base d'une différence relative entre le rapport de transmission estimé et un rapport de transmission fourni par le véhicule à voie unique, le rapport de transmission fourni par le véhicule à voie unique étant modifiable en continu.

10. Procédé selon l'une quelconque des revendications 1 à 9, dans lequel la valeur de l'indicateur de fiabilité est basée sur un nombre de pics détectés (3a-f).

11. Procédé selon l'une quelconque des revendications précédentes, dans lequel la caractéristique statistique est calculée sous la forme d'une variance.

12. Dispositif de plausibilisation qui est conçu pour déterminer la fiabilité d'un signal de capteur d'un véhicule à voie unique, comprenant :
- un dispositif d'estimation conçu pour estimer un rapport de transmission entre une vitesse de roue et une cadence de pédalage et/ou une vitesse d'entraînement du véhicule à voie unique à plusieurs instants, **caractérisé par** :
- un dispositif de détection conçu déterminer une valeur d'un indicateur de fiabilité sur la base des rapports de transmission estimés, la valeur de l'indicateur de fiabilité étant déterminée à partir d'une caractéristique statistique, notamment d'une variance, des rapports de transmission estimés et/ou d'un histogramme des rapports de transmission estimés,
- un dispositif de plausibilisation conçu pour la plausibilisation du signal de capteur à partir de la valeur de l'indicateur de fiabilité et d'une valeur de seuil, la valeur de seuil correspondant à une valeur maximale admissible de l'indicateur de fiabilité.

13. Système comprenant un véhicule à voie unique et un dispositif de plausibilisation selon la revendication 12.
